(19) **Europäisches Patentamt**

**European Patent Office**

**Office européen des brevets**

(11) **EP 1 396 707 A1**

(12) **EUROPEAN PATENT APPLICATION**
published in accordance with Art. 158(3) EPC

(43) Date of publication:
**10.03.2004 Bulletin 2004/11**

(51) Int Cl.⁷: **G01F 1/66**

(21) Application number: **02733324.4**

(86) International application number:
**PCT/JP2002/005565**

(22) Date of filing: **06.06.2002**

(87) International publication number:
**WO 2002/103300 (27.12.2002 Gazette 2002/52)**

(84) Designated Contracting States:
**AT BE CH CY DE DK ES FI FR GB GR IE IT LI LU MC NL PT SE TR**

(30) Priority: **13.06.2001 JP 2001178233**
**23.08.2001 JP 2001253113**

(71) Applicant: **FUJI ELECTRIC CO., LTD.**
**Kawasaki-shi, Kanagawa 210-0856 (JP)**

(72) Inventors:
• **OSONE, Masami c/o FUJI ELECTRIC CO., LTD.**
**Kawasaki-shi, Kanagawa 210-0856 (JP)**
• **YAO, Hironobu c/o FUJI ELECTRIC CO., LTD.**
**Kawasaki-shi, Kanagawa 210-0856 (JP)**

(74) Representative: **Hoffmann, Eckart, Dipl.-Ing.**
**Patentanwalt,**
**Bahnhofstrasse 103**
**82166 Gräfelfing (DE)**

(54) **ULTRASONIC FLOW RATE MEASUREMENT INSTRUMENT**

(57) It is an object to provide an ultrasonic flow measuring device which can accurately determine the orientation and position of a ultrasonic transducer to be secured and enhance workability such as reduction in working time. In order to attain the object, ultrasonic transducers (20) are fixed so as to be spaced from each other at a regular interval by using a positioning portion (41) of a positioning frame (40). The position adjustment of the ultrasonic transducers (20) is automatically carried out by a positioning spring (25b) and the positioning portion (41). On the other hand, a guide frame (30) can be mounted at a proper place of a conduit pipe (10) irrespective of the installation of the ultrasonic transducers. For the mounting of the guide frame (30), it is unnecessary to pay attention to an interval adjustment between the ultrasonic transducers and also it is unnecessary to coat acoustic coupling medium on the conduit pipe, so that the selection of a setup place, etc. can be freely performed. After rough assembly, required acoustic coupling medium is coated on the ultrasonic transducers, and the positioning frame (40) is fixed to the guide frame (30), whereby the regular orientation and position can be applied to the ultrasonic transducers.

FIG. 1

## Description

Technical Field

The present invention relates to an ultrasonic flow measuring device, and particularly to an ultrasonic flow measuring device having a pair of ultrasonic transducers disposed on the outer peripheral surface on the upstream and downstream sides of a conduit pipe in which fluid flows in a fixed direction, wherein a regular orientation and position are applied to the ultrasonic transducers so that a propagation plane formed of a propagation path of an ultrasonic wave on which an ultrasonic wave transmitted from one ultrasonic transducer is reflected by the inner peripheral surface of the conduit pipe and received by the other ultrasonic transducer contains the axis line of the conduit pipe, thereby measuring the velocity of the fluid flowing in the conduit pipe.

Background Technique

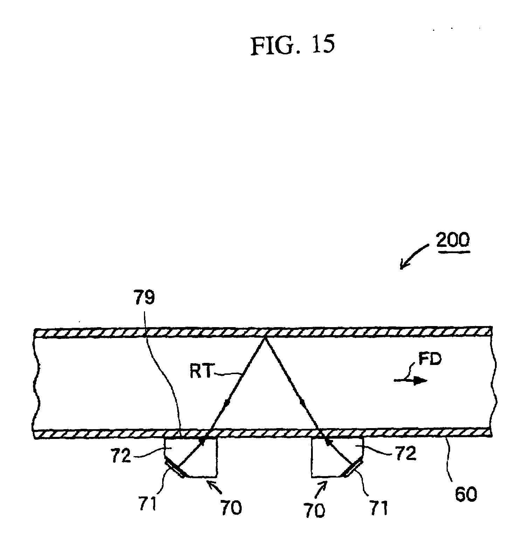

The principle of this type of ultrasonic flow measuring device will be described with reference to Fig. 15. In an ultrasonic flow measuring device 200 of Fig. 15, fluid to be measured flows in a direction indicated by an arrow FD in a conduit pipe 60. A pair of ultrasonic transducers each comprising a vibrator 71 and a plastic wedge 72 are disposed on the outer peripheral surface of the conduit pipe 60 so as to be spaced from each other by a predetermined distance. An acoustic coupling medium 79 for acoustic matching is coated between each wedge 72 and the outer peripheral surface of the conduit pipe 60 to enhance the propagation efficiency of ultrasonic waves. As indicated by a thin line having arrows, a wave transmitted from one ultrasonic transducer is reflected by the inner peripheral surface of the conduit pipe 60, and then received by the other ultrasonic transducer. A plane containing a propagation path of this ultrasonic wave is referred to as a propagation plane. Describing in connection with Fig. 15, the propagation plane corresponds to the sheet face containing the axis line of the conduit pipe 60.

When the ultrasonic transducers 70 are regularly oriented and positioned so that ultrasonic waves travel on the propagation plane, representing the velocity of the fluid flowing in the conduit pipe 60 by V, representing the propagation path length by L and representing the acoustic velocity by c, the time difference $\Delta t$ between the forward and backward directions with respect to the flowing direction concerning the arrival time from one ultrasonic transducer to the other ultrasonic transducer (propagation time difference) is represented by the following equation (1). That is,

$$\Delta t = 2LV/c^2 \qquad (1)$$

As is apparent from this equation (1), when the propagation time difference $\Delta t$ is obtained from a measurement, the flow velocity can be derived. Furthermore, when the cross-sectional area of the conduit pipe 60 is known, the flow rate of the fluid flowing through the conduit pipe can be estimated by using the flow velocity thus obtained.

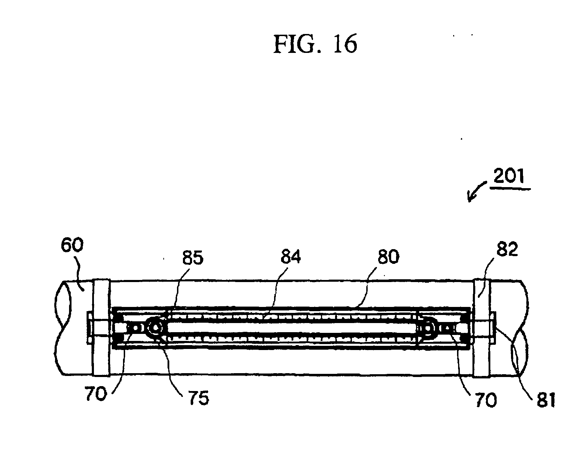

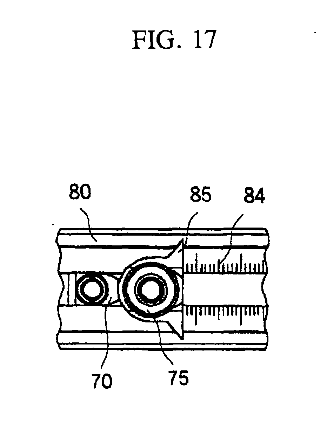

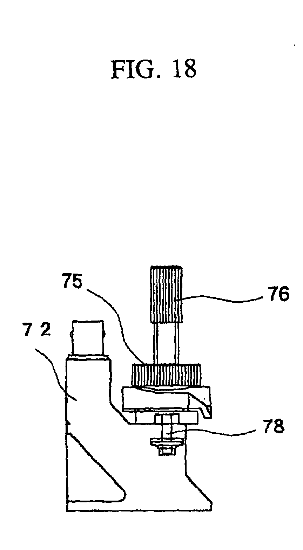

Fig. 16 is a plan view showing an example of a conventional ultrasonic flow measuring device constructed on the basis of the above-described principle, Fig. 17 is an enlarged plan view showing the surrounding of a ultrasonic transducer of Fig. 16, and Fig. 18 is an enlarged front view showing further details of the surrounding of the ultrasonic transducer of Fig. 16. In the ultrasonic flow measuring device 201 of Fig. 16, a pair of ultrasonic transducers 70 are straightly guided in parallel to the axial line of the conduit pipe 60 by a guide rail 80. The guide rail 80 comprises two frames, is disposed in parallel to the axial line of the conduit pipe 60 and guides the ultrasonic transducers 70 by pinching the side surfaces of the inserted ultrasonic transducers 70 from both sides. Both ends of the guide rail 80 are joined to saddles 81. These saddles 81 are secured to the outer peripheral surface of the conduit pipe 60 by belts 82 formed of metal or plastic.

The ultrasonic transducers 70 are guided along the guide rail so as to be straightly movable. The positioning of the ultrasonic transducers 70 is carried out so that transmission/reception of ultrasonic waves is carried out along a thin line RT with arrows of Fig. 15. As shown in Fig. 18, a positioning shaft 78 is implanted on the wedge 72 of each ultrasonic transducer 70 vertically to the bottom surface. In this case, a screw member (not shown) which is coaxial with the positioning shaft 78 and cylindrical in shape and has screw threads formed on the inner and outer sides thereof is disposed. The screw thread at the outer side of the screw member is engaged with the screw thread formed at the inner side of a position fixing screw 75, and the screw thread at the inner side of the screw member is engaged with the screw thread formed at the outer side of a height adjusting screw 76. When the position fixing screw 75 is rotated, the guide rail 80 is pinched by the upper surface of a plate member (not shown) joined to the bottom portion of the screw member and the lower surface of the position fixing screw 75, whereby the guide rail 80 can be fixed so that the transceivers 70 cannot be moved in the axial direction of the conduit pipe 60. Furthermore, when the height adjusting screw 76 is rotated, the ultrasonic transducers 70 are upwardly and downwardly moved with respect to the screw member. Accordingly, in the fixing step, the distance between the ultrasonic transducers 70 is adjusted on the basis of graduations on scales secured to the guide rail 80 so that a cursor 85 secured to each ultrasonic transducer 70 is positioned at an indicated dimension, the ultrasonic transducer 70 is fixed at the position by the position fixing screw 75 and each ultrasonic transducer 70 is brought into close contact with the upper surface of the conduit pipe 60 by the height adjusting screw 76.

In the above-described conventional example, in order to enable the ultrasonic transducers to precisely perform the transmission and reception of ultrasonic waves along the thin line RT with the arrows mutually, it is necessary to secure the ultrasonic transducers so that the propagation plane of the ultrasonic waves contains the axial line of the conduit pipe and the mutual distance between the ultrasonic transducers is appropriate. In this case, according to the graduations of the scales secured to the guide rail, the cursors secured to the ultrasonic transducers are positioned at the indicated dimensions to adjust the interval therebetween, and the ultrasonic transducers are fixed at the proper positions of the guide rail so as to be brought into close contact with the upper surface of the guide pipe by the fixing screws and the height adjusting screws. Therefore, it is not easy to secure the ultrasonic transducers with high precision. Accordingly, it takes much time to carry out the working, and a worker is required to have skill. Furthermore, since the ultrasonic transducers are coated with the acoustic coupling medium and then they are set up while positioning the guide rail to the outer peripheral surface of the guide pipe by using belts, there occur such problems that the fixing screw may slacken, a displacement may occur in the mutual interval between the ultrasonic transducers, the acoustic coupling medium may be exfoliated or hardened, the ultrasonic transducers may not be brought into close contact with the conduit pipe and an adverse effect may occur in the characteristic.

The present invention has been implemented to solve the above problems, and its object is to provide an ultrasonic flow measuring device that allows accurate setting of the orientation and position of ultrasonic transducers without difficulty, and enhance workability such as shortage of a working time.

SUMMARY OF THE INVENTION

In order to solve the above problems, according to the invention of claim 1, an ultrasonic flow measuring device including a pair of ultrasonic transducers disposed on the outer peripheral surface on the upstream and downstream sides of a conduit pipe through which fluid flows in a fixed direction is disposed, regular orientation and position are applied to the ultrasonic transducers so that a propagation plane constituted by a propagation path of ultrasonic waves contains an axial line of the conduit pipe then an ultrasonic wave transmitted from one ultrasonic transducer is reflected by the inner peripheral surface of the conduit pipe and received by the other ultrasonic transducer, thereby measuring the velocity of the fluid flowing in the conduit pipe, is equipped with a positioning mechanism for positioning the ultrasonic transducers every desired interval to apply the regular orientation and position to the ultrasonic transducers.

According the construction described above, the positioning mechanism can determine the positions of the ultrasonic transducers every desired interval, and if the optimum positioning is selected, the regular orientation and position can be automatically applied to the ultrasonic transducers.

In the invention of claim 1, the positioning mechanism has a guide frame that is mounted on the surface of the conduit pipe and guides the ultrasonic transducers straightly in the axial direction of the conduit pipe, a positioning frame that is fixed to the guide frame and holds an outer edge having a saw-tooth shape in parallel to the axial line, and positioning means that is fixed to each ultrasonic transducer and contains a positioning spring, the ultrasonic transducer being positioned by engaging a tip of the positioning spring with a proper saw-tooth portion of the positioning frame to thereby apply the regular orientation and position to the ultrasonic transducer. In this case, since the saw-tooth portion has a recess portion and a projecting portion every fixed interval, for example if the tip of the positioning spring is fitted in the recess portion, the ultrasonic transducer can be positioned every fixed interval (the invention of claim 2).

In the invention of claim 1, the positioning mechanism has a guide frame that is mounted on the surface of the conduit pipe and guides the ultrasonic transducers straightly in the axial direction of the conduit pipe, a positioning portion that is integrated with the guide frame and holds positioning holes formed at a fixed interval in parallel to the axial line, and positioning means for fixing each ultrasonic transducer mounted on the guide frame at a desired position by using the positioning hole and applying the regular orientation and position to the ultrasonic transducer. In this case, the ultrasonic transducer can be positioned by a member having a simple shape (the invention of claim 3).

In the invention of claim 1, the positioning mechanism has a guide frame that is mounted on the surface of the conduit pipe, can guide the ultrasonic transducers straightly in the axial direction of the conduit pipe, and has plural positioning holes formed on the side surface, and positioning means that is fixed to each ultrasonic transducer and has a positioning projection formed thereon, when the ultrasonic transducer is mounted on the guide frame, the positioning projection being fitted into a desired position hole to apply the regular orientation and position to the ultrasonic transducer. Accordingly, if the ultrasonic transducer with which the positioning means is sub-assembled is inserted into the guide frame mounted on the conduit pipe, the ultrasonic transducer can be mounted on the guide frame through one-touch operation (the invention of claim 4).

In the invention of any one of claims 2 to 4, the positioning means contains a spring member for pressing each ultrasonic transducer onto the conduit pipe with elastic force when the ultrasonic transducers are mounted on the guide frame. In this case, it is unnecessary that the ultrasonic transducer is adjusted to come into contact with the conduit pipe (the invention of claim 5).

In the invention of any one of claims 1 to 5, the guide frame can be secured to the outer peripheral surface of the conduit pipe as another step before the installation of the ultrasonic transducers is completed. Accordingly, after the installation of the guide frame is completed, the installation of the ultrasonic transducers can be performed separately. Therefore, the guide frame can be installed with no effect of the position of the acoustic coupling medium, so that the working time can be shortened (the invention of claim 6).

BRIEF DESCRIPTION OF THE DRAWINGS

Fig. 1 is a front view showing an embodiment 1 of an ultrasonic flow measuring device according to the present invention.

Fig. 2 is a plan view of the ultrasonic flow measuring device of Fig. 1 which is viewed from the lower side.

Fig. 3 is an enlarged view showing the details of the surrounding of a positioning shaft of ultrasonic transducers shown in Fig. 1 and Fig. 2.

Fig. 4 is a diagram showing the fabrication of the ultrasonic transducers and the positioning frame of the ultrasonic flow measuring device of Fig. 1.

Fig. 5 is a diagram showing the fabrication of the guide frame and the conduit pipe of the ultrasonic flow measuring device of Fig. 1.

Fig. 6 is a plan view showing an embodiment 2 of the ultrasonic flow measuring device according to the present invention.

Fig. 7 is an enlarged view showing the details of the surrounding of a positioning shaft of ultrasonic transducers shown in Fig. 6.

Fig. 8 is a cross-sectional view taken along a line X-X of Fig. 7.

Fig. 9 is a diagram showing a case where a disc spring is used in place of a coil spring of Fig. 8.

Fig. 10 is a front view showing an embodiment 3 of the ultrasonic flow measuring device according to the present invention.

Fig. 11 is a plan view of the ultrasonic flow measuring device of Fig. 10 which is viewed from the lower side.

Fig. 12 is an enlarged view showing the details of the surrounding of the positioning shaft of the ultrasonic transducers shown in Fig. 10.

Fig. 13 is a cross-sectional view taken along a line Y-Y of Fig. 12.

Fig. 14 is a diagram showing a sub assembly state of the ultrasonic transducers before the ultrasonic transducers are installed as shown in Fig. 10.

Fig. 15 is a diagram showing the principle of the ultrasonic flow measuring device.

Fig. 16 is a plan view showing a conventional example of the ultrasonic flow measuring device.

Fig. 17 is an enlarged view showing the details of the surrounding of the ultrasonic transducers of Fig. 16.

Fig. 18 is a front view showing the details of the structure shown in Fig. 17.

BEST MODES FOR CARRYING OUT THE INVENTION

An embodiment 1 according to the present invention will be described with reference to the accompanying drawings.

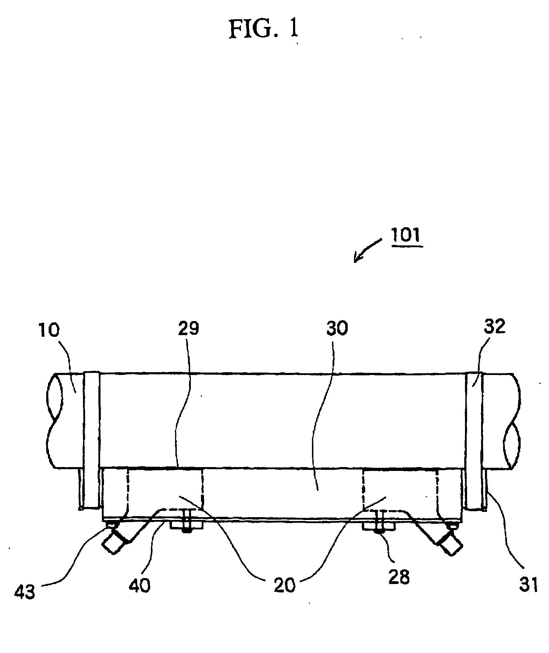

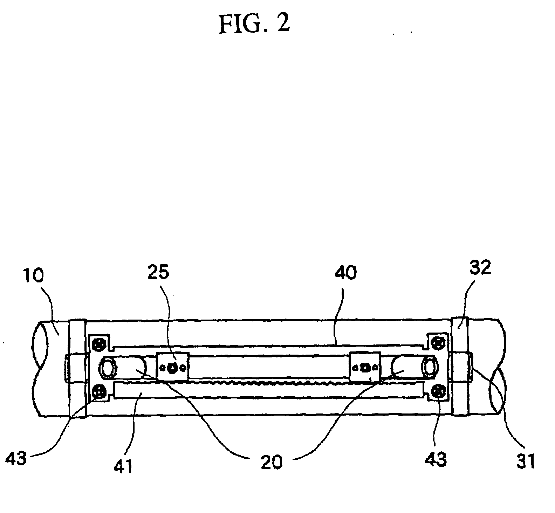

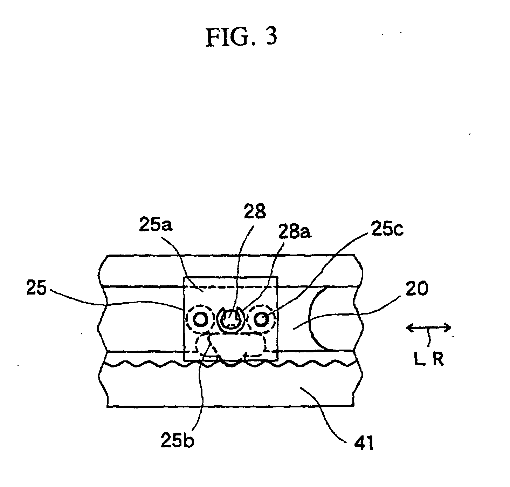

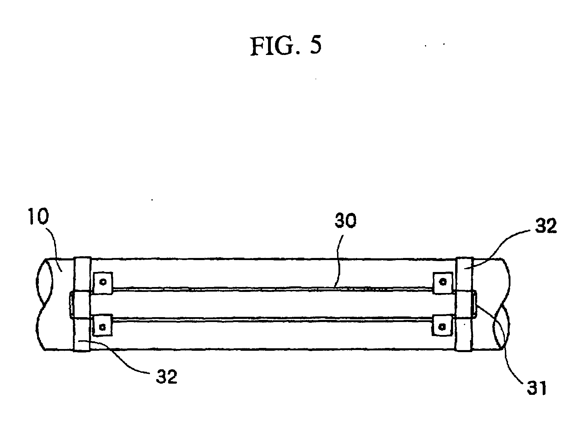

Fig. 1 is a front view showing an embodiment 1 of an ultrasonic flow measuring device according to the present invention, Fig. 2 is a plan view of the ultrasonic flow measuring device of Fig. 1 which is viewed from the lower side, Fig. 3 is an enlarged view showing the details of the surrounding of the positioning shaft of the ultrasonic transducer shown in Figs. 1 and 2, Fig. 4 is a diagram showing a sub assembly state of the ultrasonic transducer and a positioning frame in the ultrasonic flow measuring device of Fig. 1, and Fig. 5 is a diagram showing a mounting state of a guide frame to a conduit pipe of the ultrasonic flow measuring device of Fig. 1.

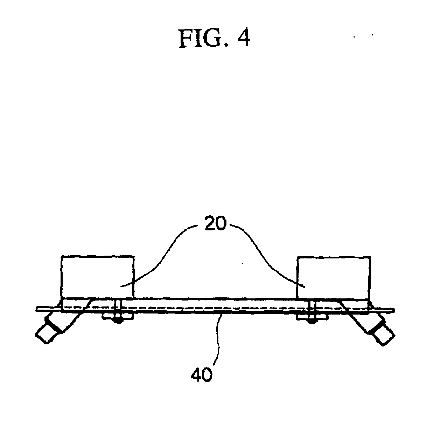

In the ultrasonic flow measuring device 101 shown in Figs. 1 and 2, the conduit pipe 10 has a cylindrical shape, and fluid to be measured is made to flow through the conduit pipe 10. Ultrasonic transducers 20 are respectively disposed on the outer peripheral surface on the upstream and downstream sides of the conduit pipe 10, and an ultrasonic wave transmitted from one ultrasonic transducer is reflected by the inner peripheral surface of the conduit pipe 10 and received by the other ultrasonic transducer. A guide frame 30 comprises a pair of plate-shaped members (see Fig. 5) that are disposed in parallel to each other so as to be spaced from each other at such an interval that the ultrasonic transducers 20 can be inserted therebetween. Both end portions of the plate-shaped members are joined to each other and unified into one body by saddles 31. The saddles 31 are mounted on the outer peripheral surface of the conduit pipe 10 by belts 32. When the ultrasonic transducers 20 are inserted into the gap between the plate-shaped members, the guide frame 30 pinches the ultrasonic transducers 20 from both sides so as to guide the ultrasonic transducers 20 straightly in parallel to the axial line of the conduit pipe 10. A positioning frame 40 has a positioning member 41 whose outer edge is designed in a saw-tooth shape (the plate-shaped positioning portion 41 is preferably spot-welded on the positioning frame 40), and it is fixed onto the guide frame 30 by fixing screws 43. Before the positioning frame 40 is fixed, it is assembled with the ultrasonic transducers 20 (see Fig. 4).

The above assembly is carried out by using a positioning metal fitting 25 containing a press plate 25a secured to the ultrasonic transducer 20 and a positioning spring 25b secured to the press plate 25a. At this time, the positioning spring 25b is engaged with a proper saw-tooth portion of the positioning portion 41. Accordingly, when the positioning frame 40 is assembled with the ultrasonic transducers 20 is fixed to the guide frame 30, the regular orientation and position can be automatically applied to the ultrasonic transducers 20. Furthermore, when the positioning frame 40 assembled with the ultrasonic transducers 20 is fixed to the guide frame 30, the acoustic coupling medium 29 is coated on the surface of the conduit pipe 10 with which the ultrasonic transducers 20 are brought into close contact, thereby enhancing the propagation efficiency of ultrasonic waves.

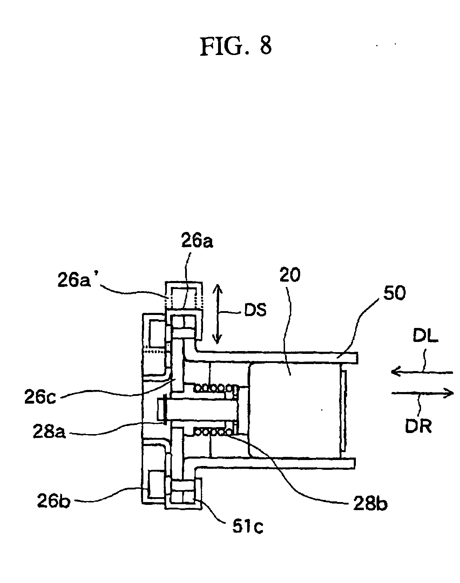

A construction of a preferable specific example on the assembly described above will be briefly described. The press plate 25a containing the positioning spring 25b as shown in Fig. 3 and a support plate (not shown)(disposed below the press plate 25a in Fig. 3) are assembled with each other by two fixing screws 25c (see Fig. 3) to become the positioning metal fitting 25. A through hole for the positioning shaft 28 of a respective ultrasonic transducer 20 is formed at the center of the positioning metal fitting 25. At the time point when the assembly is carried out as described above, the press plate 25a and the support plate pinch the edge of the positioning frame 40 at the outer edge portions thereof so as to be slidable in the direction of an arrow LR, and the positioning spring 25b is engaged with the desired saw-tooth portion of the positioning portion 41. Then, a coil spring (or disc spring) is mounted on the positioning shaft 28 of the ultrasonic transducer 20, located between the ultrasonic transducer 20 and the positioning metal fitting 25 and fixed by an E ring 28a so that the positioning shaft 28 is prevented from dropping out of the positioning metal fitting 25 (a similar construction is shown in Fig. 8). As described above, the ultrasonic transducers 20 are fixed to the positioning frame 40 through the positioning portion 41 provided on the positioning frame 40 so as to be spaced from each other at a regular interval. That is, the positioning adjustment of the ultrasonic transducers 20 can be carried out by hand by the positioning springs 25b and the positioning portions 41 (it is carried out as a sub assembly as shown in Fig. 4), so that the fixing can be surely and easily performed.

Besides, the guide frame 30 can be mounted on the conduit pipe 10 as a step separate from the assembling work for the ultrasonic transducers 20 and the positioning frame 40. Since the ultrasonic transducers 20 are not fixed to the guide frame 30 at the time point of the mounting of the guide frame 30 shown in Fig. 5, it is unnecessary to pay attention to the interval adjustment of the ultrasonic transducers 20; moreover it is unnecessary to coat the acoustic coupling medium on the conduit pipe 10 unlike the prior art, so that selection of the setup place, movement and positioning of the guide frame 30 can be freely performed. Since the fixing work can be divided as described above, the work can be performed even by an unskilled person, and the number of steps can be reduced. After the guide frame 30 is mounted on the conduit pipe 10, the acoustic coupling medium is coated on the bottom surface of the ultrasonic transducers assembled with the positioning frame 40, the ultrasonic transducers 20 are inserted into the guide frame 30 and the positioning frame 40 is fixed by the fixing screws 43 to complete the fabrication.

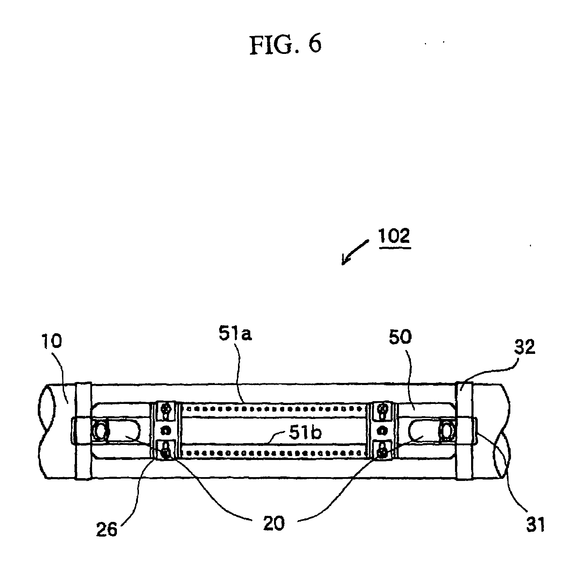

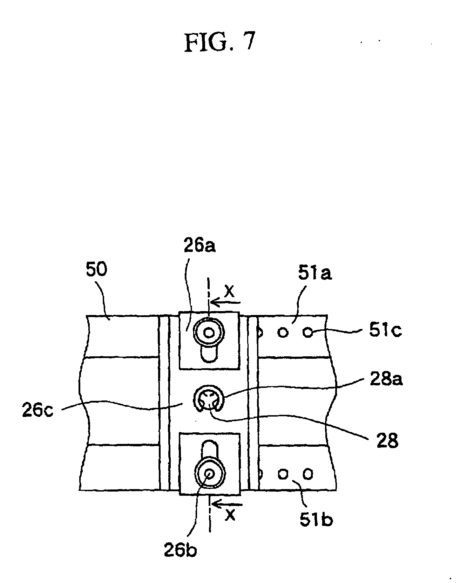

Next, an embodiment 2 of the ultrasonic flow measuring device according to the present invention will be described with reference to Figs. 6 to 8. Fig. 6 is a plan view showing the embodiment 2 of the ultrasonic flow measuring device according to the present invention, Fig. 7 is an enlarged view showing the details of the surrounding of the positioning shaft of the ultrasonic transducer shown in Fig. 6, and Fig. 8 is a cross-sectional view taken along a line X-X of Fig. 7.

The ultrasonic flow measuring device 102 of Fig. 6 has a pair of ultrasonic transducers 20 and a guide frame 50 for guiding the ultrasonic transducers 20. The conduit pipe 10 has a cylindrical shape, and fluid to be measured flows inside it. The ultrasonic transducers 20 are disposed on the outer peripheral surface of the conduit pipe 10. The guide frame 50 has a pair of guide plate portions which are disposed to confront each other in parallel in order to guide each ultrasonic transducer 20 straightly. The upper end edges of the guide plate portions are bent at right angles so as to be located on the same plane, and a plurality of positioning holes 51c are formed in a row in the guide plate portions to form positioning portions 51a, 51b. The positioning holes 51c of the positioning portions 51 a, 51 b are formed so as to be symmetric with respect to the center line of the pair of the guide plate portions and disposed at a desired pitch. Furthermore, the ends of the guide frame 50 are joined to saddles 31, and the saddles 31 are fixed to the conduit pipe 10 by belts 32. In this case, the ultrasonic transducers 20 are coated with acoustic coupling medium on the contact surface thereof with the conduit pipe 10 and then mounted on the conduit pipe 10.

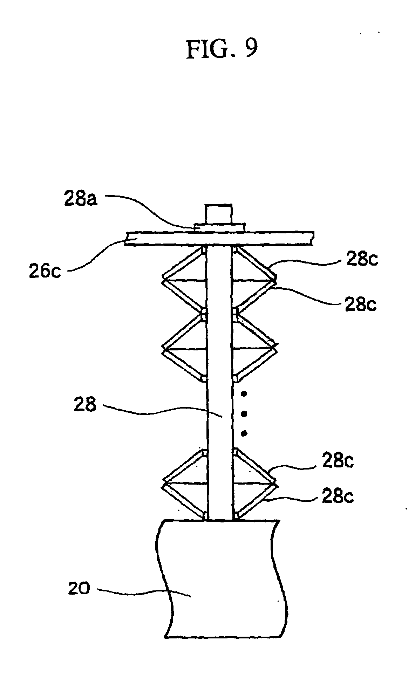

The fabrication of the above-described ultrasonic flow measuring device 102 will be described. First, the guide frame 50 is fixed onto the conduit pipe 10 by using the belts 32. Separately from this work, a coil spring 28b and a press plate 26c are mounted on the positioning shaft 28 of each ultrasonic transducer 20 and fixed by an E ring 28a so as not to drop out of the positioning shaft 28. Presser metal fittings 26a of a positioning metal fitting 26 are fixed by press-fitting fixing pins 26b into the press plate 26c. The presser metal fittings 26a are slidable in the direction of an arrow DS. The presser metal fittings 26a are moved outwardly in the direction of arrow DS to be opened (this state is shown by 26a'). The acoustic coupling medium 29 is coated on the bottom surface of ultrasonic transducers 20, which are inserted into the guide plate portions of the guide frame 50 secured to the conduit pipe 10, and the press plate 26c is placed on the positioning portions 51a, 51b. The tip portion of the fixing pins 26b press-fitted in the press plate 26c is matched with proper positioning holes 51 c, and the presser metal fittings 26a are moved inwardly in the direction of arrow DS to be closed and to fix the guide frame 50. In place of the coil spring 28b of Fig. 8, disc springs 28c may be used while stacked as shown in Fig. 9.

In the case of the ultrasonic flow measuring device 102 described above, the press plate 26c brings the ultrasonic transducer 20 into contact with the outer peripheral surface of the conduit pipe 10 under elastic force in cooperation with the coil spring 28b mounted on the positioning shaft 28, and the ultrasonic transducer 20 is fixed so as to apply the normal orientation and position to the ultrasonic transducer 20 by the press plate 26c and the positioning portions 51a, 51b. With this construction, as compared with the ultrasonic flow measuring device 101 of Fig. 1, in the ultrasonic flow measuring device 102 according to this embodiment, the two parts of the guide frame 30 and the positioning frame 40 used in Fig. 1 can be substantially replaced by one part of the guide frame 50, and expensive parts can be eliminated. Furthermore, since no positioning spring 25b is used, the cost can be reduced. The point that the work can be divided and the advantage achieved by that are the same as the ultrasonic flow measuring device 101 of Fig. 1.

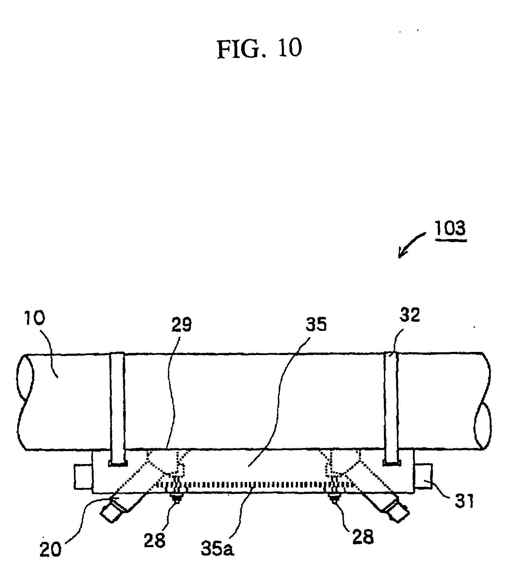

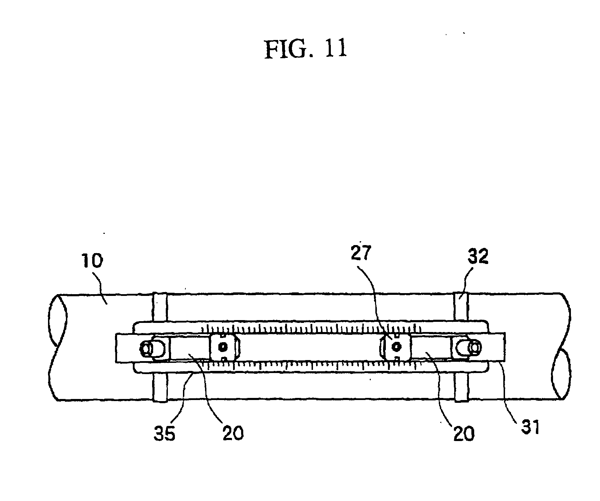

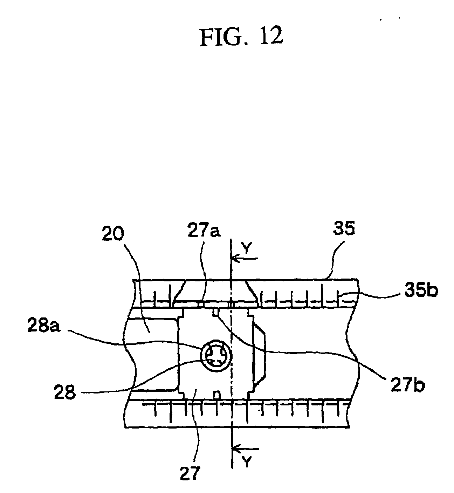

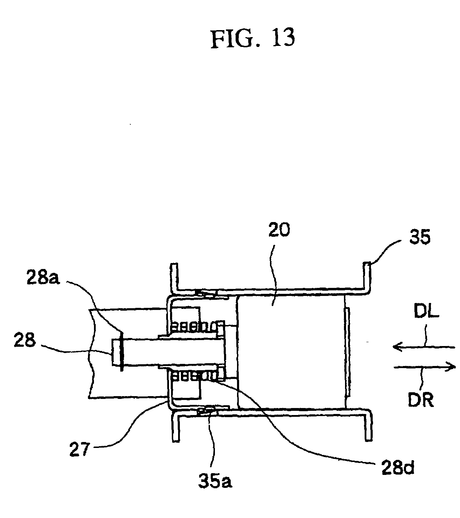

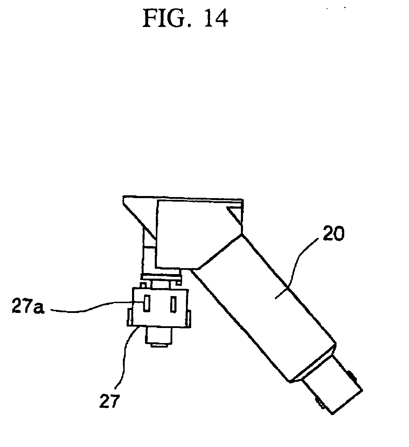

Next, an embodiment 3 of the ultrasonic flow measuring device will be described with reference to Figs. 10 to 14. Fig. 10 is a front view showing the embodiment 3 of the ultrasonic flow measuring device according to this invention, Fig. 11 is a plan view of the ultrasonic transducer shown in Fig. 10 which is viewed from the lower side, Fig. 12 is an enlarged view showing the details of the surrounding of the positioning shaft of the ultrasonic transducer of Fig. 11, Fig. 13 is a cross-sectional view taken along a line Y-Y of Fig. 12, and Fig. 14 is an enlarged view showing the details of a sub assembly state of the ultrasonic transducer shown in Fig. 10.

The ultrasonic flow measuring device 103 shown in Figs. 10 and 11 basically has the same construction as the ultrasonic flow measuring devices 101 and 102 described previously, however, it has a different fixing mechanism of the ultrasonic transducers 20 as described below. That is, the guide frame 35 of the ultrasonic flow measuring device 103 has plural positioning holes 35a formed in a row on the side surface. A coil spring 28d and a positioning metal fitting 27 are mounted on the positioning shaft 28 of each ultrasonic transducer 20, and they are fixed by an E ring 28a so as not to drop out of the positioning shaft 28.

The ultrasonic transducer 20, the coil spring 28d and the positioning metal fitting 27 described above are pre-assembled as shown in Fig. 14. In this case, the positioning metal fitting 27 is preferably formed of a plate member having elasticity. The assembly as shown in Fig. 14 is inserted into the guide frame 35. In this case, the positioning projection(s) 27a of the positioning metal fitting 27 is(are) fitted in the positioning holes 35a of the guide frame 35 (see Figs. 12, 13, and 14), and assembled as shown in Figs. 10 and 11. In order to fit easily the positioning projection(s) 27a into the proper positioning hole(s) 35a, slits 27b are formed in the positioning metal fitting 27, and graduations 35b are formed on the upper portion of the guide frame 35. At the time of this assembly, the acoustic coupling medium 29 is coated on the bottom surfaces of the ultrasonic transducers 20.

When the assembly is properly carried out as described above, the ultrasonic transducers 20 are freely movable in the directions of the arrows DL, DR in Fig. 13 in the guide frame 35. Accordingly, when the transceiver sub-assembly shown in Fig. 14 is installed in the guide frame 35, the ultrasonic transducer 20 is urged by the compressed coil spring 28d to move in the direction of the arrow DR, and the bottom surface thereof abuts against the surface of the conduit pipe 10. Accordingly, the transceiver sub-assemblies can be mounted to the guide frame 35 through one-touch operation, and it is not so difficult to detach them from the guide frame 35. The point that the work can be divided and the advantage achieved by this point are the same as with the ultrasonic flow measuring devices 101 and 102.

INDUSTRIAL APPLICABILITY

The ultrasonic flow measuring device of this invention is constructed as described above. Therefore, the positioning mechanism can determine the positions of the ultrasonic transducers every desired interval, and if the optimum positioning is selected, the regular orientation and position can be automatically applied to the ultrasonic transducers. Furthermore, the fixing of the guide frame to the conduit pipe and the fixing of the ultrasonic transducers to the positioning frame can be carried out as different works, and thus the operation efficiency is high. For example, since it is unnecessary to coat the acoustic coupling medium on the conduit pipe at the time when the guide frame is fixed to the conduit pipe, selection of the setup place, the movement and the positioning of the guide frame can be freely performed. Furthermore, when the ultrasonic transducers are secured, they are positioned by using the positioning springs and the positioning holes, so that the positioning of the ultrasonic transducers can be easily performed. Still furthermore, when the positioning means having the positioning projection is used, the mounting of the ultrasonic transducers onto the guide frame can be performed through one-touch operation, and thus it is very efficient.

Description of Reference Numerals

10 conduit pipe, 20 ultrasonic transducer, 25, 26, 27 positioning metal fitting, 25a, 26c press plate, 25b positioning spring, 26a press fitting, 26b fixing pin, 27a positioning projection, 27b slit, 28 positioning shaft, 28a E ring, 28b coil spring, 28c disc spring, 29 acoustic coupling medium, 30, 35 guide frame, 31 saddle, 32 belt, 35b graduations, 35a positioning hole, 40, 50 positioning frame, 41, 51 positioning portion, 43 fixing screw, 101, 102, 103 ultrasonic flow measuring device.

**Claims**

1. An ultrasonic flow measuring device including a pair of ultrasonic transducers disposed on the outer peripheral surface on the upstream and downstream sides of a conduit pipe through which fluid flows in a fixed direction, regular orientation and position are applied to the ultrasonic transducers so that a propagation plane constituted by a propagation path of ultrasonic waves contains an axial line of the conduit pipe when an ultrasonic wave transmitted from one ultrasonic transducer is reflected by the inner peripheral surface of the conduit pipe and received by the other ultrasonic transducer, thereby measuring the velocity of the fluid flowing in the conduit pipe, **characterized by** including:

   a positioning mechanism for positioning the ultrasonic transducers every desired interval to apply the regular orientation and position to the ultrasonic transducers.

2. The ultrasonic flow measuring device according to claim 1, wherein the positioning mechanism comprises;

   a guide frame that is mounted on the surface of the conduit pipe and guides the ultrasonic transducers straightly in the axial direction of the conduit pipe;
   a positioning frame that is fixed to the guide frame and holds an outer edge having a sawtooth shape in parallel to the axial line; and
   positioning means that is fixed to each ultrasonic transducer and contains a positioning spring, the ultrasonic transducer being positioned by engaging a tip of the positioning spring with a proper saw-tooth portion of the positioning frame to thereby apply the regular orientation and position to the ultrasonic transducer.

3. The ultrasonic flow measuring device according to claim 1, wherein the positioning mechanism comprises:

   a guide frame that is mounted on the surface of the conduit pipe and guides the ultrasonic transducers straightly in the axial direction of the conduit pipe;
   a positioning portion that is integrated with the guide frame and holds positioning holes formed at a fixed interval in parallel to the axial line; and
   positioning means for fixing each ultrasonic transducer mounted on the guide frame at a desired position by using the positioning hole and applying the regular orientation and position to the ultrasonic transducer.

4. The ultrasonic flow measuring device according to claim 1, wherein the positioning mechanism comprises:

   a guide frame that is mounted on the surface of the conduit pipe, can guide the ultrasonic transducers straightly in the axial direction of the conduit pipe, and has plural positioning holes formed on the side surface; and
   positioning means that is fixed to each ultrasonic transducer and has a positioning projection formed thereon, when the ultrasonic transducer is mounted on the guide frame, the positioning projection being fitted into a desired position hole to apply the regular orientation and position to the ultrasonic transducer.

5. The ultrasonic flow measuring device according to any one of claims 2 to 4, wherein the positioning means contains a spring member for pressing each ultrasonic transducer onto the conduit pipe with elastic force when the ultrasonic transducer is mounted on the guide frame.

6. The ultrasonic flow measuring device according to any one of claims 1 to 5, wherein the guide frame can be secured to the outer peripheral surface of the conduit pipe as another step before installation of the ultrasonic transducer.

FIG. 1

FIG. 2

FIG. 3

FIG. 4

FIG. 5

FIG. 6

## FIG. 7

# FIG. 8

# FIG. 9

FIG. 10

FIG. 11

FIG. 12

FIG. 13

FIG. 14

FIG. 15

FIG. 16

FIG. 17

FIG. 18

# INTERNATIONAL SEARCH REPORT

| International application No. |
|---|
| PCT/JP02/05565 |

| A. CLASSIFICATION OF SUBJECT MATTER |
|---|
| Int.Cl⁷ G01F1/66 |

According to International Patent Classification (IPC) or to both national classification and IPC

| B. FIELDS SEARCHED |
|---|
| Minimum documentation searched (classification system followed by classification symbols) |
| Int.Cl⁷ G01F1/66 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 04-022454 B (Tokimec Inc.),<br>17 April, 1992 (17.04.92),<br>Full text; all drawings<br>(Family: none) | 1,5,6<br>2,3,4 |
| X<br>A | JP 07-333021 A (Kubota Corp.),<br>22 December, 1995 (22.12.95),<br>Full text; all drawings<br>(Family: none) | 1<br>2,3,4,5,6 |
| X<br>A | JP 61-133821 A (Fuji Electric Co., Ltd.),<br>21 June, 1986 (21.06.86),<br>Full text; all drawings<br>(Family: none) | 1<br>2,3,4,5,6 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 August, 2002 (06.08.02) | 20 August, 2002 (20.08.02) |

| Name and mailing address of the ISA/ | Authorized officer |
|---|---|
| Japanese Patent Office | |
| Facsimile No. | Telephone No. |

Form PCT/ISA/210 (second sheet) (July 1998)